# EUROPEAN PATENT APPLICATION

(11) **EP 2 557 522 A2**
(43) Date of publication of application: **13.02.2013**
(21) Application number: 12178293.2
(22) Date of filing: 27.07.2012
(51) Int. Cl.: G06F 21/60

(54) **Software part validation using hash values**

(30) Priority: 04.08.2011 US 201113198467
(71) Applicant: The Boeing Company, Chicago, IL 60606-2016 (US)
(72) Inventor: Lawson, Jack D., Newcastle, WA Washington 98059 (US); Gould, Todd William, Marysville, WA Washington 98271 (US); Royalty, Charles David, Bellevue, WA Washington 98006 (US)
(74) Representative: Howson, Richard G.B.

(57) **Abstract**

A system and method for validating software parts on an aircraft. A first hash value is calculated for a software part on the aircraft. A determination is made on the aircraft as to whether the first hash value matches a second hash value from a software integrity data structure stored on the aircraft. The software integrity data structure comprises the hash values that are not determined on the aircraft for the software parts used by the aircraft. A validation status is provided based on whether the first hash value matches the second hash value. An operation is performed on the software part on the aircraft only if the first hash value matches the second hash value.

## Description

### BACKGROUND

The present disclosure relates generally to aircraft and, in particular, to managing aircraft software parts. Still more particularly, the present disclosure relates to a method and apparatus for managing aircraft software parts and for validating software parts on an aircraft before operations are performed on the software parts.

Modern aircraft are extremely complex. For example, an aircraft may have many types of electronic systems on board. An electronic system on an aircraft may be a line-replaceable unit (LRU). A line-replaceable unit is designed to be easily replaceable. A line-replaceable unit may be replaced when the aircraft is in flight or while the aircraft is on the ground. Line-replaceable units are typically packaged in a box and may be sealed.

An electronic system may take on various forms. An electronic system on an aircraft may be, for example, without limitation, a flight management system, an autopilot, an in-flight entertainment system, a communications system, a navigation system, a flight controller, a flight recorder, and a collision avoidance system. The various electronic systems on an aircraft may communicate with each other via digital airplane networks.

Electronic systems may use software or programming to provide the logic or control for various operations and functions. The software used in these electronic systems is commonly treated as parts in the airline industry. In particular, a software application for use in a line-replaceable unit on an aircraft may be tracked separately from the line-replaceable unit itself. Aircraft software that is treated as an aircraft part may be referred to as a loadable software aircraft part, an aircraft software part, or simply as a software part. Software parts may be considered part of an aircraft's configuration rather than part of the hardware which operates the software.

Aircraft operators are entities that operate aircraft. Aircraft operators also may be responsible for the maintenance and repair of aircraft. Examples of aircraft operators include airlines and military units. When an aircraft operator receives an aircraft, software parts are typically already installed in the electronic systems on the aircraft. An aircraft operator may also receive copies of these loaded software parts in case the parts need to be reinstalled or reloaded into the electronic systems on the aircraft.

Reloading of software parts may be required, for example, if a line-replaceable unit in which the software is used is replaced or repaired. Further, the aircraft operator also may receive updates to the software parts from time to time. These updates may include additional features not present in the currently-installed software parts and may be considered upgrades to one or more electronic systems. Specified procedures may be followed during loading of software parts on an aircraft so that the current configuration of the aircraft, including all of the software parts loaded on the aircraft, is known.

Various operations may be performed on a software part after the part is loaded on the aircraft. For example, the software part may be loaded onto an electronic system, the software part may be run on the electronic system to perform a function, the software part may be deleted, and/or some other operation may be performed on or using the software part. The software part may be validated before any electronic system operations are performed on the part. Validation of the software part may be performed to verify that the software part has not been altered from its original form. Current methods for validating software parts are based on digital signatures and require the use of complicated public key infrastructure components. These processes may be more time consuming and expensive than desired. These processes also have particular limitations in their ability to detect all software part alterations, particularly alterations that are intentional and malicious in nature.

Accordingly, it would be advantageous to have a method and apparatus for validating software parts that are less expensive and improve the detection of altered software so that its use can be prevented.

### SUMMARY

An advantageous embodiment of the present disclosure provides a method for validating software parts on an aircraft. A first hash value is calculated on the aircraft for a software part on the aircraft. Next, it is determined on the aircraft whether the first hash value matches a second hash value from a software integrity data structure stored on the aircraft. The software integrity data structure comprises hash values that are not determined on the aircraft for software parts used by the aircraft. A validation status is provided based on whether the first hash value matches the second hash value. An operation is performed on the software part on the aircraft only if the first hash value matches the second hash value.

Another advantageous embodiment of the present disclosure provides an apparatus which comprises a software integrity data structure stored on the aircraft, a calculator on the aircraft, and a comparator on the aircraft. The software integrity data structure comprises hash values that are not determined on the aircraft for software parts used by the aircraft. The calculator is configured to calculate a first hash value for a software part on the aircraft. The comparator is configured to determine whether the first hash value matches a second hash value from the software integrity data structure. The aircraft is configured to perform an operation on the software part only if the first hash value matches the second hash value.

Another advantageous embodiment of the present disclosure provides another method for validating software parts for an aircraft. A number of software parts is received. A hash value for each of the number of software parts is determined to form a number of hash values. The number of hash values is combined into a software integrity data structure for use in determining whether to perform operations on a number of software parts on an aircraft.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives, and advantages thereof, will best be understood by reference to the following detailed description of an advantageous embodiment of the present disclosure when read in conjunction with the accompanying drawings, wherein:
**Figure 1** is a block diagram of a software part management environment for managing software parts on the ground and on an aircraft in accordance with an advantageous embodiment;
**Figure 2** is a block diagram of a system for determining whether software parts on an aircraft are correct in accordance with an advantageous embodiment;
**Figure 3** is a block diagram of a software integrity data structure in accordance with an advantageous embodiment;
**Figure 4** is a block diagram showing a flow of software parts from a software supplier to an aircraft and a flow of information for validation of the software parts for use on the aircraft in accordance with an advantageous embodiment;
**Figure 5** is a block diagram showing another flow of information for validation of software parts on an aircraft in accordance with an advantageous embodiment;
**Figure 6** is a block diagram showing another flow of information for validation of software parts on an aircraft in accordance with an advantageous embodiment;
**Figure 7** is a block diagram showing a flow of software parts from an aircraft operator to an aircraft in accordance with an advantageous embodiment;
**Figure 8** is a flowchart of a process for generating and using a software integrity data structure in accordance with an advantageous embodiment;
**Figure 9** is a flowchart of a process for validating a software part on an aircraft in accordance with an advantageous embodiment; and
**Figure 10** is an illustration of a data processing system in accordance with an advantageous embodiment.

### DETAILED DESCRIPTION

The different advantageous embodiments recognize and take into account a number of different considerations. "A number", as used herein with reference to items, means one or more items. For example, "a number of different considerations" are one or more different considerations.

The different advantageous embodiments recognize and take into account that current methods for validating software and other data loaded on an aircraft are based on physical media handling processes and/or digital signatures. Physical media handling processes for aircraft software parts may include the use of secure shipping methods, electronic inspection of media content, and cyclic redundancy check verification of software parts by equipment onboard the aircraft.

The different advantageous embodiments also recognize and take into account that digital signatures using certificate-based public key infrastructures (PKI) are currently used to provide validation for software parts loaded on aircraft. Use of digital signatures relies on public key infrastructure components that require expensive setup and maintenance. Furthermore, public key infrastructure-based security solutions are not well suited to use on fleets of mobile aircraft due to the difficulty of maintaining keys and certificates in aircraft applications. For example, the different advantageous embodiments recognize and take into account that certificate-based public key infrastructure solutions require a certificate with a limited lifetime and timely revocation status. Aircraft with limited connectivity to ground-based certificate authorities may not be able to determine certificate registration status in a timely manner.

Advantageous embodiments also recognize and take into account that currently, aircraft may employ commercial off-the-shelf public key infrastructure software that may not be evaluated for safety in aircraft applications. Therefore, safety certification of aircraft systems employing such software can be complicated.

Advantageous embodiments provide an improvement in the methods by which software is validated for use on aircraft electronic systems. In particular, advantageous embodiments provide an improvement in the way that the integrity of software parts on an aircraft is validated.

In accordance with an advantageous embodiment, hash values and digital fingerprints are generated for software parts to be loaded on an aircraft. The hash values and fingerprints may be stored in a software integrity data structure. The software integrity data structure is loaded onto the aircraft separately from the other software parts. The software integrity data structure is validated and secured before it is used to validate other software parts. The software integrity data structure may be validated and secured using methods known in the industry, such as, without limitation, secure networks, secure storage, PKI, or validation of a hash of the software integrity data structure against a known good value. The hash values and fingerprints may then be used to validate the software parts on the aircraft before operations are performed on the software parts in the aircraft electronic systems. In one embodiment, a software part may be validated by an electronic system of the aircraft which will operate the software. In another advantageous embodiment, the software part may be validated by a software validator before the software part is transferred to a line-replaceable unit.

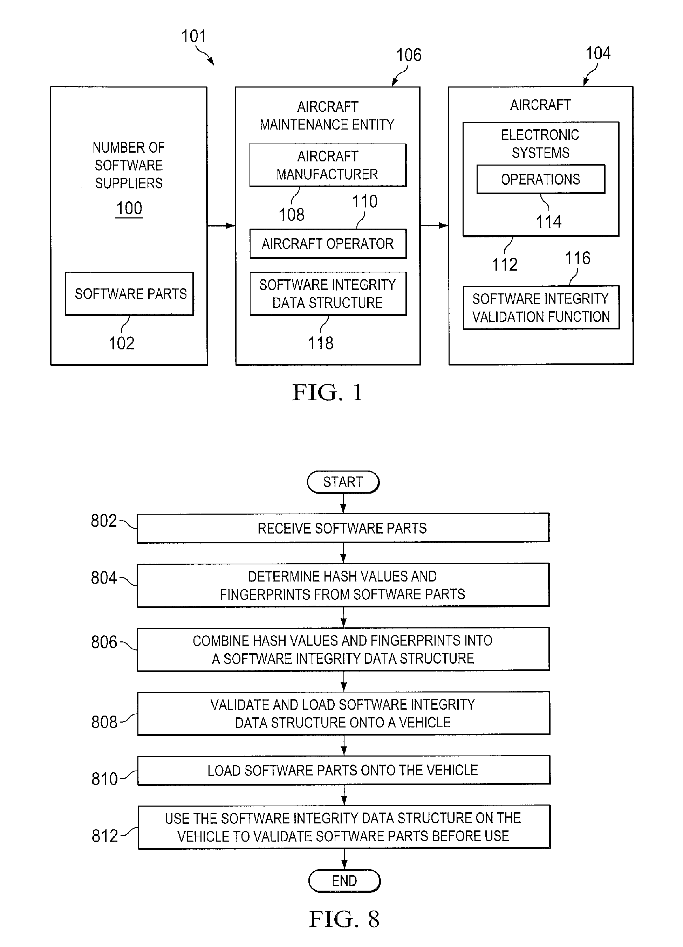

Turning now to **Figure 1****,** a block diagram of a software part management environment for managing software parts on the ground and on an aircraft is depicted in accordance with an advantageous embodiment. In this example, number of software suppliers **100** in software part management environment **101** supply software parts **102.** Number of software suppliers **100** may include any entity that develops or otherwise supplies software parts **102.** For example, without limitation, number of software suppliers **100** may include an aircraft manufacturer; an aircraft operator, such as an airline or military organization; or a third party software developer. Software parts **102** may comprise any software applications or data to be used on aircraft **104.**

Aircraft maintenance entity **106** in software part management environment **101** loads software parts **102** provided by number of software suppliers **100** on aircraft **104** for use on aircraft **104.** Aircraft maintenance entity **106** may be any entity that is responsible for loading software parts **102** on aircraft **104.** For example, aircraft maintenance entity **106** may include aircraft manufacturer **108** or aircraft operator **110.** Aircraft operator **110** may be, without limitation, an airline, military organization, or any other private or government organization that operates aircraft **104.** Aircraft maintenance entity **106** may or may not be the owner of aircraft **104.** Aircraft maintenance entity **106** may include an entity acting on behalf of the owner of aircraft **104** to load software parts **102** on aircraft **104.** In any case, it is assumed that aircraft maintenance entity **106** has authority to load software parts **102** on aircraft **104.** Aircraft maintenance entity **106** may follow specified procedures for loading of software parts **102** on aircraft **104** so that the current configuration of aircraft **104,** including all software parts **102** currently loaded on aircraft **104,** is known.

Aircraft **104** may be a commercial or private passenger or cargo aircraft or a military or other government aircraft. Software parts **102** may be distributed to aircraft **104** by aircraft maintenance entity **106.** For example, software parts **102** may be loaded onto aircraft **104** for use by electronic systems **112** on aircraft **104.** For example, electronic systems **112** may include line-replaceable units.

Operations **114** performed on or using software parts **102** by electronic systems **112** may affect the performance or safety of aircraft **104.** Therefore, it is desirable to determine whether software parts **102** on aircraft **104** are correct. Determining whether software parts **102** to be used on aircraft **104** are correct and not corrupted may be referred to as validating software parts **102.** Operations **114** should not be performed by electronic systems **112** on software parts **102** on aircraft **104** if the integrity of software parts **102** cannot be confirmed to be correct.

Validating the integrity of software parts **102** may include determining whether software parts **102** currently loaded on aircraft **104** are the same as software parts **102** that were produced by number of software suppliers **100.** Software parts **102** on aircraft **104** may become corrupted or otherwise changed. For example, software parts **102** may be corrupted during the process of software part distribution from number of software suppliers **100** to aircraft maintenance entity **106** to aircraft **104** and during storage of software parts **102** at various locations during this process. Such changes to software parts **102** may be accidental or malicious.

In accordance with an advantageous embodiment, software integrity validation function **116** may be performed on aircraft **104.** Software integrity validation function **116** may be used to determine whether software parts **102** on aircraft **104** are correct before operations **114** are performed on software parts **102.** Software integrity validation function **116** may be used to validate software parts **102** loaded on aircraft **104** periodically.

In accordance with an advantageous embodiment, software integrity validation function **116** employs hash values and other attributes collected in software integrity data structure **118** to validate software parts **102** on aircraft **104.** Software integrity data structure **118** also may be referred to as a hash file or a master hash file. Software integrity data structure **118** may be generated by aircraft maintenance entity **106** and may be loaded on aircraft **104** by aircraft maintenance entity **106.** Aircraft maintenance entity **106,** which generates software integrity data structure **118,** may be the same as or different from aircraft maintenance entity **106,** which loads software parts **102** on aircraft **104.**

Over time, certain software parts **102** may be removed from aircraft **104,** and new software parts **102** may be loaded on aircraft **104.** These actions change the configuration of aircraft **104.** New software parts **102** loaded on aircraft **104** will require changes to software integrity data structure **118,** which is used to validate software parts **102** on aircraft **104.** Changes to software integrity data structure **118** may be made by generating an entirely new software integrity data structure **118** reflecting all existing software parts for the model of aircraft **104.**

Alternatively, necessary changes to software integrity data structure **118** to reflect new software parts may be provided as updates to existing software integrity data structure **118.** Updates to software integrity data structure **118** may be generated by aircraft maintenance entity **106.** Updates to software integrity data structure **118** may be loaded onto aircraft **104** to update software integrity data structure **118** on aircraft **104** without requiring regeneration and reloading of the entire software integrity data structure **118.**

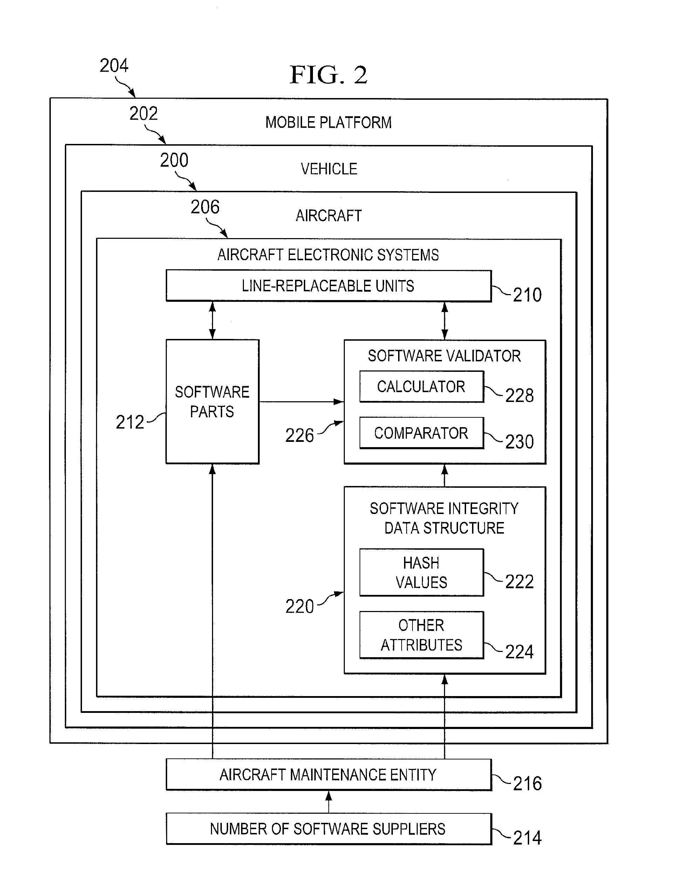

Turning now to **Figure 2****,** a block diagram of a system for determining whether software parts on an aircraft are correct is depicted in accordance with an advantageous embodiment. In this example, aircraft **200** is an example of one implementation of aircraft **104** in **Figure 1****.** Aircraft **200** is an example of vehicle **202** in which advantageous embodiments may be implemented. Vehicle **202** may be another type of aerospace vehicle, such as a spacecraft or any other vehicle that is capable of travelling through the air, in space, or both. Vehicle **202** may also be a ground vehicle or a water vehicle, such as a train, a surface ship, or a submarine. Vehicle **202** is an example of one type of mobile platform **204** in which advantageous embodiments may be implemented.

Aircraft **200** may include aircraft electronic systems **206.** Aircraft electronic systems **206** may comprise various hardware devices or systems that are connected together in any appropriate network architecture. Aircraft electronic systems **206** may include line-replaceable units **210.** For example, without limitation, aircraft electronic systems **206** may include systems with processors that run software in the form of software parts **212.**

Software parts **212** may be developed or otherwise provided by number of software suppliers **214.** Software parts **212** from number of software suppliers **214** may be loaded onto aircraft **200** by aircraft maintenance entity **216.** In this example, number of software suppliers **214** is an example of number of software suppliers **100** in **Figure 1****,** and aircraft maintenance entity **216** is an example of aircraft maintenance entity **106** in **Figure 1****.**

Aircraft maintenance entity **216** also may generate and load software integrity data structure **220** on aircraft **200.** In accordance with an advantageous embodiment, software integrity data structure **220** is used to validate the other software parts **212** on aircraft **200.** Therefore, software integrity data structure **220** may be loaded onto aircraft **200** and maintained in aircraft **200** in a manner that maintains the security of software integrity data structure **220.**

For example, software integrity data structure **220** may be loaded onto aircraft **200** in the manner of other aircraft software parts **212** to maintain proper configuration control of aircraft **200.** A digital signature or other method or system may be used to provide security for software integrity data structure **220** when loaded on aircraft **200** and to prevent corruption of software integrity data structure **220** on aircraft **200.**

Software integrity data structure **220** includes hash values **222** and other attributes **224** for software parts **212** on aircraft **200.** Hash values **222** and other attributes **224** are generated by aircraft maintenance entity **216** or some other entity from software parts **212** before software parts **212** are loaded on aircraft **200.**

Hash values **222** may include digital or other numeric values that are generated from software parts **212** using any appropriate cryptographic or other appropriate hash function. For example, without limitation, the SHA-256 hash function or another hash function may be used to generate hash values **222** for software parts **212.** The SHA-256 hash function results in a 256 bit hash value for any given software part.

Other attributes **224** may include various digital alphanumeric or other values that identify software parts **212.** Other attributes **224** may be associated in software integrity data structure **220** with corresponding hash values **222** for corresponding software parts **212.** Other attributes **224** may include one or more fingerprints for each of software parts **212.** These fingerprints may be generated from software parts **212** using a fingerprinting algorithm or fingerprint function. The algorithm or function used to generate other attributes **224** is preferably different from the hash function used to generate hash values **222.**

Hash values **222** and other attributes **224** from software integrity data structure **220** may be used by software validator **226** to validate software parts **212** on aircraft **200.** In this example, software validator **226** is an example of an apparatus for performing software integrity validation function **116** of **Figure 1****.** Software validator **226** may be implemented in aircraft electronic systems **206** using hardware or hardware operating in combination with software to implement the functions of software validator **226** as described herein.

Software validator **226** may include calculator **228** and comparator **230.** Calculator **228** is used by software validator **226** to determine hash values for software parts **212** on aircraft **200.** The hash values determined by calculator **228** may be referred to as first hash values. The hash values for software parts **212** on aircraft **200** are determined by calculator **228** using the same hash function that was used to generate hash values **222** in software integrity data structure **220.** Hash values **222** in software integrity data structure **220** may be referred to as second hash values.

Calculator **228** also may be used by software validator **226** to determine other attributes for software parts **212** on aircraft **200.** The other attributes determined by calculator **228** may be referred to as first attributes. The other attributes for software parts **212** on aircraft **200** are determined by calculator **228** using the same algorithm or function that was used to generate other attributes **224** in software integrity data structure **220.** Other attributes **224** in software integrity data structure **220** may be referred to as second attributes.

Comparator **230** is used by software validator **226** to compare the hash values generated by calculator **228** with hash values **222** in software integrity data structure **220** for corresponding software parts **212.** Comparator **230** also may be used by software validator **226** to compare the other attributes generated by calculator **228** with other attributes **224** in software integrity data structure **220** for corresponding software parts **212.**

If the hash value for one of software parts **212** on aircraft **200** as determined by calculator **228** does not match the hash value from software integrity data structure **220** for the software part, then the software part is not validated. Similarly, if the other attributes for one of software parts **212** on aircraft **200** as determined by calculator **228** does not match other attributes **224** from software integrity data structure **220** for the software part, then the software part is not validated. In either case, software validator **226** may provide an indication to aircraft electronic systems **206** that the software part is not validated. In this case, aircraft electronic systems **206** may not perform operations on the software part. An onboard or off-board human operator of aircraft **200** may be informed when software validator **226** determines that a software part is not validated so that the appropriate action may be taken.

If comparator **230** determines that both the hash value for one of software parts **212** on aircraft **200** as determined by calculator **228** matches the hash value from software integrity data structure **220** for the software part and the other attributes for the software part on aircraft **200** as determined by calculator **228** matches other attributes **224** from software integrity data structure **220** for the software part, then the software part is validated. In this case, software validator **226** may provide an indication to aircraft electronic systems **206** that the software part is validated, and aircraft electronic systems **206** may perform desired operations on the validated software part.

Any differences between software parts **212** on aircraft **200** and the software parts used to generate hash values **222** and other attributes **224** will result in calculator **228** determining hash values and other attributes for software parts **212** that are different from hash values **222** and other attributes **224** in software integrity data structure **220.** These differences may be the result of software parts **212** being provided or loaded from an unauthorized source or compromised integrity of software parts **212** on aircraft **200.**

In any case, comparator **230** will detect these differences so that appropriate actions may be taken. For example, these actions may include, without limitation, not performing operations on such software parts **212** on aircraft **200** and notifying an operator of aircraft **200** that such software parts **212** on aircraft **200** are not correct.

It is possible that the hash function used to generate hash values **222** in software integrity data structure **220** may be diminished over time in its ability to uniquely identify particular bit images of software parts **212.** Requiring both hash values and other attributes determined by calculator **228** to match hash values **222** and other attributes **224** in software integrity data structure **220** in order for software parts **212** to be validated provides increased confidence in the validation and extends the useful life of software integrity data structure **220.**

The illustrations of **Figure 1** and **Figure 2** are not meant to imply physical or architectural limitations to the manner in which different advantageous embodiments may be implemented. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

For example, more than one software validator **226** may be implemented for simultaneous operation in aircraft **200.** Furthermore, the functions performed by software validator **226** may be implemented in one or more locations in aircraft **200.** In one example, software validator **226** may be implemented in one or more aircraft electronic systems **206** that operate software parts **212.** As another example, software validator **226** may be implemented as a separate software integrity validation function used to validate software parts **212** for use on a number of aircraft electronic systems **206.** In this case, the functions performed by software validator **226** may be performed to validate software parts **212** before software parts **212** are loaded into aircraft electronic systems **206** or before operations are performed on software parts **212** by aircraft electronic systems **206.**

As another example, the functions performed by software validator **226** may be performed at different locations in aircraft electronic systems **206.** For example, the functions performed by calculator **228** may be performed by aircraft electronic systems **206** in which software parts **212** to be validated are loaded. In this case, the hash values and other attributes determined by calculator **228** may be sent to comparator **230** located at another location in aircraft **200.** Comparator **230** may then send an indication back to aircraft electronic systems **206** indicating the results of the comparisons performed by comparator **230** for software parts **212** loaded in aircraft electronic systems **206.**

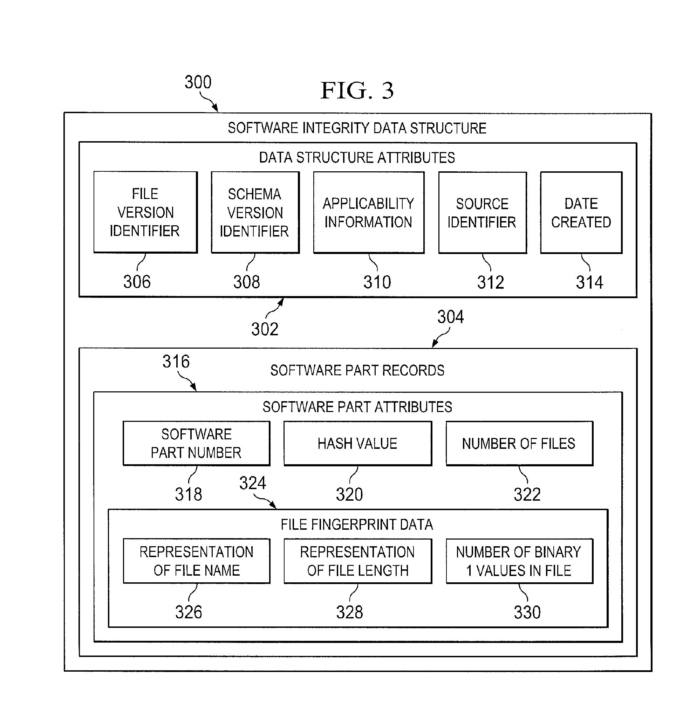

Turning now to **Figure 3****,** a block diagram of a software integrity data structure is depicted in accordance with an advantageous embodiment. In this example, software integrity data structure **300** is an example of one implementation of software integrity data structure **118** in **Figure 1** and software integrity data structure **220** in **Figure 2****.** Software integrity data structure **300** may include data structure attributes **302** and number of software part records **304.**

Data structure attributes **302** may include attributes that describe software integrity data structure **300** itself. For example, without limitation, data structure attributes **302** may include file version identifier **306,** schema version identifier **308,** applicability information **310,** source identifier **312,** and date created **314.**

File version identifier **306** may identify a particular version of software integrity data structure **300.** Schema version identifier **308** may identify the version of a schema used to create software integrity data structure **300.** For example, schema version identifier **308** may identify the version of an XML schema used to create software integrity data structure **300.** Applicability information **310** may include information about the aircraft or other vehicle on which software integrity data structure **300** may be used. For example, applicability information **310** may include information identifying an aircraft model or aircraft system on which software integrity data structure **300** may be used.

Source identifier **312** may identify the entity that created software integrity data structure **300.** For example, source identifier **312** may include the name of the company or other entity that created software integrity data structure **300.** Date created **314** may specify the date that software integrity data structure **300** was created.

Each software part in an aircraft that may be validated using software integrity data structure **300** may be represented by a corresponding one of software part records **304** in software integrity data structure **300.** Each one of software part records **304** may include a number of software part attributes **316.** Software part attributes **316** may include attributes that describe or are derived from the software parts represented by corresponding software part records **304.** For example, without limitation, software part attributes **316** may include software part number **318,** hash value **320,** number of files **322,** and file fingerprint data **324.**

Software part number **318** may include a number identifying the software part represented by the corresponding software part record. Hash value **320** may include the hash value determined for the software part. For example, without limitation, hash value **320** may include a hexadecimal or other representation of a hash value obtained from an SHA-256 or other hash function that is computed using the software part as input. Number of files **322** may indicate the number of files that make up the software part.

File fingerprint data **324** may include a fingerprint for the software part that is derived from the software part. File fingerprint data **324** may be provided for each with the number of files in the software part. File fingerprint data **324** may be derived from the software part using one or more fingerprint algorithms or functions used for each software part file. Preferably, file fingerprint data **324** is not determined from the software part using a hash function, such as the hash function used to determine hash value **320.** In one example, file fingerprint data **324** may include representation of file name **326,** representation of file length **328,** and number of binary 1 values in file **330.** For example, representation of file name **326** may include an ASCII character representation or other representation of the software part file name.

Representation of file length **328** may comprise an ASCII integer or other representation of the software part file length in bytes. Number of binary 1 values in file **330** may include an ASCII integer or other representation of the number of binary 1 values contained in the software part file.

File fingerprint data **324** may be a string value that is formed by concatenating representation of file name **326,** representation of file length **328,** and number of binary 1 values in file **330** with each item separated by a semi-colon or other character. A fingerprint, in accordance with an advantageous embodiment, may be determined and formatted differently from file fingerprint data **324** described by example herein. Also, a software integrity data structure, in accordance with an advantageous embodiment, may include more, fewer, or different data structure attributes or software part attributes from those described by example herein.

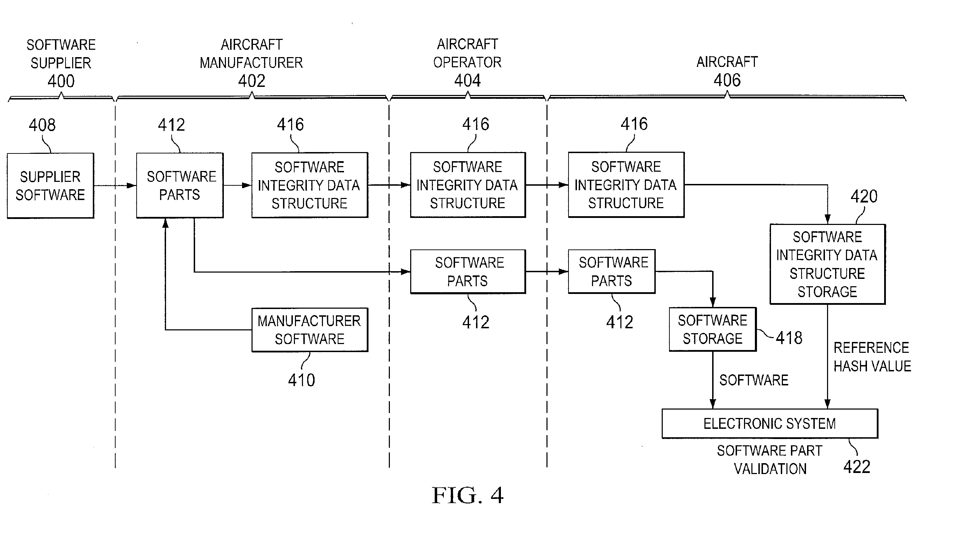

Turning now to **Figure 4****,** a block diagram showing a flow of software parts from a software supplier to an aircraft and a flow of information for validation of the software parts for use on the aircraft is depicted in accordance with an advantageous embodiment. In this example, software supplier **400** and aircraft manufacturer **402** are examples of number of software suppliers **100** in **Figure 1** and number of software suppliers **214** in **Figure 2****.** In this example, aircraft operator **404** is an example of aircraft maintenance entity **106** in **Figure 1** and aircraft maintenance entity **216** in **Figure 2****.** In this example, aircraft **406** is an example of aircraft **104** in **Figure 1** and aircraft **200** in **Figure 2****.**

Software supplier **400** develops or otherwise provides supplier software **408** to aircraft manufacturer **402.** Software supplier **400** may be one of a number of third party or other software suppliers that provide supplier software **408** to aircraft manufacturer **402.**

Aircraft manufacturer **402** may develop its own manufacturer software **410.** Aircraft manufacturer **402** may combine its own manufacturer software **410** with supplier software **408** from software supplier **400** to provide software parts **412** to aircraft operator **404.** Software parts **412** may be loaded by aircraft manufacturer **402** onto an aircraft in production. Aircraft manufacturer **402** also may generate software integrity data structure **416** from software parts **412.** Aircraft manufacturer **402** may provide software parts **412** and software integrity data structure **416** to aircraft operator **404.** Aircraft operator **404** may load software integrity data structure **416** onto aircraft **406** and may load or reload software parts **412** on aircraft **406** as needed.

Software parts **412** may be stored in software storage **418** on aircraft **406.** Software integrity data structure **416** may be stored in software integrity data structure storage **420** on aircraft **406.** In this example, validation of a software part is performed by electronic system **422** on aircraft **406.** In this case, a software part may be provided from software storage **418** to electronic system **422,** and a reference hash value and other attributes may be provided from software integrity data structure storage **420** to electronic system **422.** Electronic system **422** may then determine a hash value and other attributes from the software part and compare the determined hash value and other attributes to the reference hash value and other attributes from software integrity data structure **416** to validate the software part in the manner described above. Electronic system **422** may perform operations on the software part if the software part is validated by electronic system **422.**

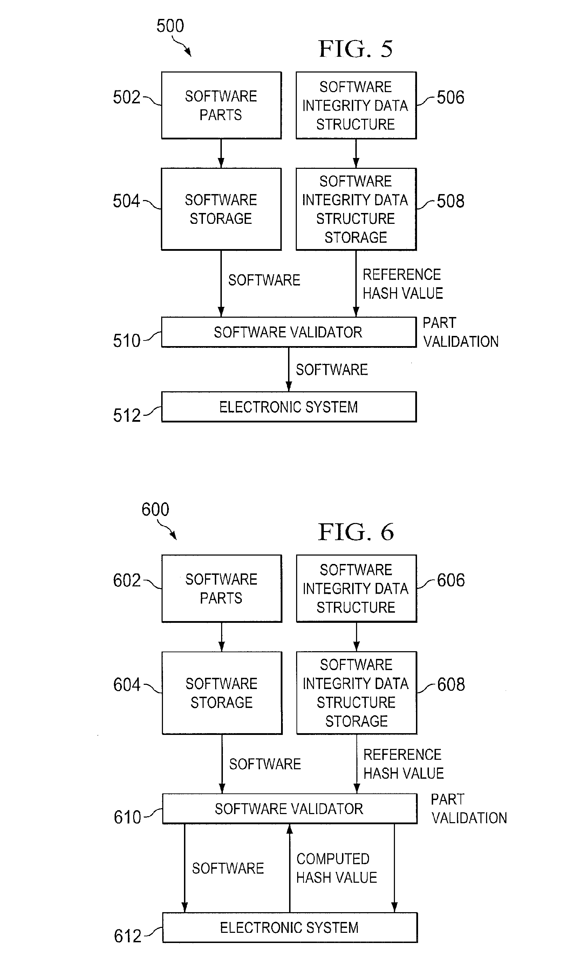

Turning now to **Figure 5****,** a block diagram showing another flow of information for validation of software parts on an aircraft is depicted in accordance with an advantageous embodiment. In this example, aircraft **500** is another example of aircraft **406** in **Figure 4****.** **Figure 5** shows a flow of information on aircraft **500** for a process for validating software parts on an aircraft that is an alternative to the process for validating software parts in **Figure 4****.** Software parts **502** may be stored in software storage **504** on aircraft **500.** Software integrity data structure **506** may be stored in software integrity data structure storage **508** on aircraft **500.**

In this example, validation of a software part is performed by software validator **510** separate from electronic system **512** on which the software part will be used. In this case, the software part may be sent from software storage **504** to software validator **510,** and a reference hash value and other attributes may be sent from software integrity data structure storage **508** to software validator **510.** Software validator **510** may then determine a hash value and other attributes from the software part.

Software validator **510** also may compare the determined hash value and other attributes to the reference hash value and other attributes from software integrity data structure **506.** This comparison is made to validate the software part in the manner described above. If the software part is validated by software validator **510,** the software part may be provided to electronic system **512** on aircraft **500.** Operations may then be performed on the validated software part by electronic system **512.**

Turning now to **Figure 6****,** a block diagram showing another flow of information for validation of software parts on an aircraft is depicted in accordance with an advantageous embodiment. In this example, aircraft **600** is another example of aircraft **406** in **Figure 4****.** **Figure 6** shows a flow of information on aircraft **600** for a process of validating software parts on an aircraft that is an alternative to the processes for validating software parts in **Figure 4** and **Figure 5****.** Software parts **602** may be stored in software storage **604** on aircraft **600.** Software integrity data structure **606** may be stored in software integrity data structure storage **608** on aircraft **600.**

In this example, validation of a software part is performed by software validator **610** and electronic system **612.** In this case, the software part may be sent from software storage **604** to software validator **610,** and a reference hash value and other attributes may be sent from software integrity data structure storage **608** to software validator **610.** Software validator **610** may then load the software part onto electronic system **612.** Electronic system **612** may determine a hash value and other attributes from the software part.

The hash value and other attributes determined by electronic system **612** may then be sent back to software validator **610.** Software validator **610** may then compare the hash value and other attributes determined by electronic system **612** with the hash value and other attributes from software integrity data structure **606** to validate the software part in the manner described above. Software validator **610** may send an indication to electronic system **612** when the software part is validated by software validator **610.** Operations may then be performed on the validated software part by electronic system **612.**

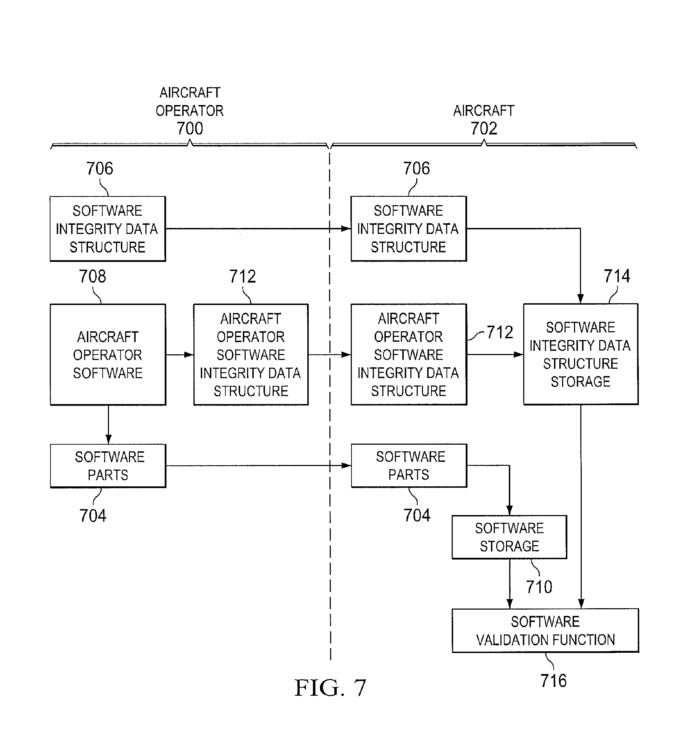

Turning now to **Figure 7****,** a block diagram showing a flow of software parts from an aircraft operator to an aircraft is depicted in accordance with an advantageous embodiment. In this example, aircraft operator **700** is an example of aircraft operator **404** in **Figure 4****,** and aircraft **702** is an example of aircraft **406** in **Figure 4****.**

Aircraft operator **700** is provided software parts **704** and software integrity data structure **706** from an aircraft manufacturer. In this example, aircraft operator **700** may also develop or otherwise provide its own aircraft operator software **708.** Aircraft operator **700** may load software parts **704,** including aircraft operator software **708,** onto aircraft **702.** Software parts **704** are stored in software storage **710** on aircraft **702** in this illustrative example.

In this depicted example, aircraft operator **700** also generates its own aircraft operator software integrity data structure **712** from aircraft operator software **708.** Software integrity data structure **706** and aircraft operator software integrity data structure **712** may be loaded onto aircraft **702** by aircraft operator **700** and stored in software integrity data structure storage **714** on aircraft **702.** Software parts **704** stored in software storage **710** and hash values and other attributes stored in software integrity data structure storage **714** may be used to validate software parts **704** by software validation function **716** on aircraft **702** using one of the procedures for software part validation described above with reference to **Figure 4****,** **Figure 5,** or **Figure 6****.**

Turning now to **Figure 8****,** a flowchart of a process for generating and using a software integrity data structure is depicted in accordance with an advantageous embodiment. The process illustrated in **Figure 8** may be implemented, for example, in software part management environment **101** in **Figure 1****.**

The process begins by receiving software parts (operation **802**). For example, operation **802** may include receiving aircraft software parts from a software supplier. Hash values and fingerprints are then determined from the software parts (operation **804**). Operation **804** may include determining the hash values and fingerprints from the software parts using appropriate hash functions or other algorithms.

The hash values and fingerprints for multiple software parts may then be combined into a software integrity data structure (operation **806**). The software integrity data structure may be validated and loaded onto a vehicle, such as an aircraft (operation **808**). It is desirable that the software integrity data structure itself is validated before it is used to validate other software parts. Otherwise, the software integrity data structure cannot be trusted to validate the other software parts.

The software parts also may be loaded onto the vehicle (operation **810**). The software integrity data structure may be used on the vehicle to validate the software parts before they are used on the vehicle (operation **812**), with the process terminating thereafter.

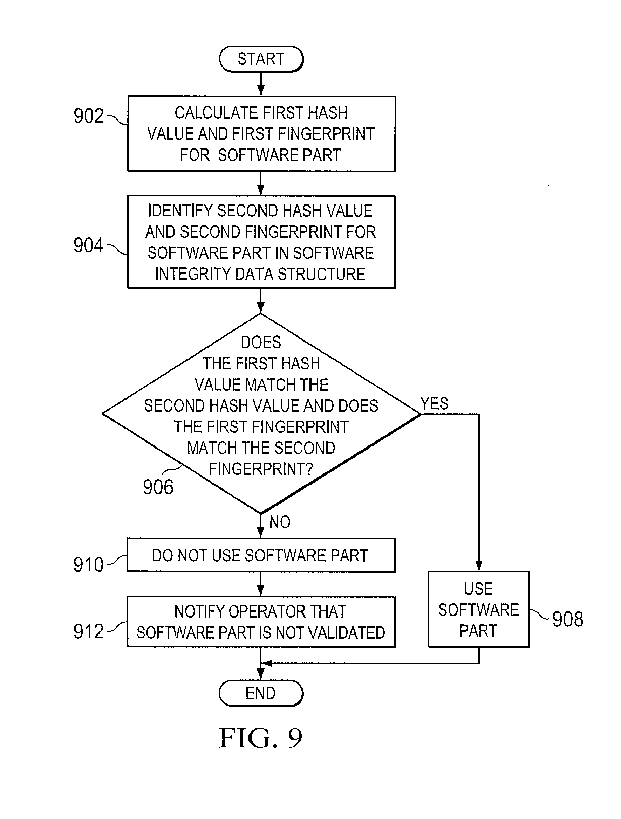

Turning now to **Figure 9****,** a flowchart of a process for validating a software part on an aircraft is depicted in accordance with an advantageous embodiment. The process of **Figure 9** may be implemented, for example, in software validator **226** in **Figure 2****.** The process of **Figure 9** is an example of a process that may be used to implement operation **812** in **Figure 8****.**

The process may begin by calculating a first hash value and a first fingerprint for a software part stored on the aircraft (operation **902**). A second hash value and a second fingerprint for the software part are identified in a software integrity data structure (operation **904**).

A determination may be made as to whether the first hash value matches the second hash value and the first fingerprint matches the second fingerprint (operation **906**). If it is determined that both the hash values and the fingerprints match, the software part may be used on the aircraft (operation **908**), with the process terminating thereafter. If a determination is made that either the first hash value does not match the second hash value or the first fingerprint does not match the second fingerprint, then the software part may not be used on the aircraft (operation **910**). An operator of the aircraft may be notified if the software part is not validated (operation **912**), with the process terminating thereafter.

The flowcharts and block diagrams in the different depicted embodiments illustrate the architecture, functionality, and operation of some possible implementations of apparatuses and methods in an advantageous embodiment. In this regard, each block in the flowcharts or block diagrams may represent a module, segment, function, and/or a portion of an operation or step. For example, one or more of the blocks may be implemented as program code, in hardware, or a combination of program code and hardware. When implemented in hardware, the hardware may, for example, take the form of integrated circuits that are manufactured or configured to perform one or more operations in the flowcharts or block diagrams.

In some alternative implementations of an advantageous embodiment, the function or functions noted in the blocks may occur out of the order shown in the figures. For example, in some cases, two blocks shown in succession may be executed substantially concurrently, or the blocks may sometimes be performed in the reverse order, depending upon the functionality involved. Also, other blocks may be added in addition to the blocks illustrated in a flowchart or block diagram.

One or more of the advantageous embodiments provides a capability to validate the integrity of software or other data distributed from a software supplier to an aircraft. In accordance with an advantageous embodiment, software validation on the aircraft may be performed with or without an aircraft-to-ground network connection. Software validation in accordance with an advantageous embodiment does not require complicated public key infrastructure components, such as certificate authorities. Advantageous embodiments employ hash values for software validation. Hash values do not expire. Therefore, advantageous embodiments eliminate the limitations of certificate management and certificate expiration in systems that rely on public key infrastructure components for software security.

Therefore, advantageous embodiments provide a validation of the integrity of software or other data on an aircraft provided that the source of the software integrity data structure is trusted. Advantageous embodiments also provide for software part validation on an aircraft in a manner that may be safety certified at less risk and cost than current methods using public key infrastructure software.

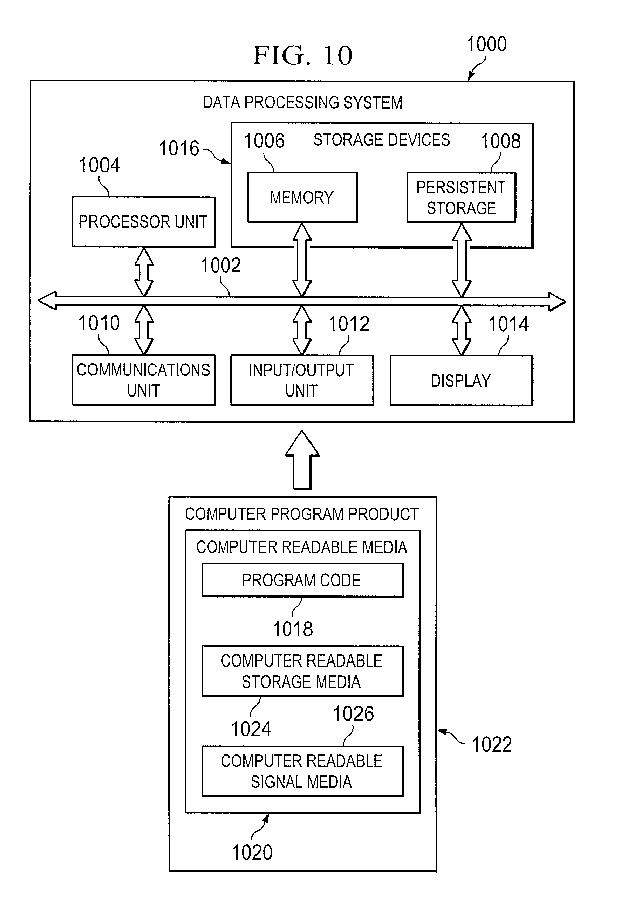

Turning now to **Figure 10****,** an illustration of a data processing system is depicted in accordance with an advantageous embodiment. In this example, data processing system **1000** is an example of aircraft electronic systems **206** in **Figure 2****.** For example, data processing system **1000** is an example of one implementation of line-replaceable units **210** in **Figure 2****.** In this illustrative example, data processing system **1000** includes communications fabric **1002.** Communications fabric **1002** provides communications between processor unit **1004,** memory **1006,** persistent storage **1008,** communications unit **1010,** input/output (I/O) unit **1012,** and display **1014.**

Processor unit **1004** serves to execute instructions for software that may be loaded into memory **1006.** Processor unit **1004** may be a number of processors, a multi-processor core, or some other type of processor, depending on the particular implementation. A number, as used herein with reference to an item, means one or more items. Further, processor unit **1004** may be implemented using a number of heterogeneous processor systems in which a main processor is present with secondary processors on a single chip. As another illustrative example, processor unit **1004** may be a symmetric multi-processor system containing multiple processors of the same type.

Memory **1006** and persistent storage **1008** are examples of storage devices **1016.** A storage device is any piece of hardware that is capable of storing information, such as, for example, without limitation, data, program code in functional form, and/or other suitable information either on a temporary basis and/or a permanent basis. Storage devices **1016** may also be referred to as computer readable storage devices in these examples. Memory **1006,** in these examples, may be, for example, a random access memory or any other suitable volatile or non-volatile storage device. Persistent storage **1008** may take various forms, depending on the particular implementation.

For example, persistent storage **1008** may contain one or more components or devices. For example, persistent storage **1008** may be a hard drive, a flash memory, a rewritable optical disk, a rewritable magnetic tape, or some combination of the above. The media used by persistent storage **1008** also may be removable. For example, a removable hard drive may be used for persistent storage **1008.**

Communications unit **1010,** in these examples, provides for communications with other data processing systems or devices. In these examples, communications unit **1010** is a network interface card. Communications unit **1010** may provide communications through the use of either or both physical and wireless communications links.

Input/output unit **1012** allows for input and output of data with other devices that may be connected to data processing system **1000.** For example, input/output unit **1012** may provide a connection for user input through a keyboard, a mouse, and/or some other suitable input device. Further, input/output unit **1012** may send output to a printer. Display **1014** provides a mechanism to display information to a user.

Instructions for the operating system, applications, and/or programs may be located in storage devices **1016,** which are in communication with processor unit **1004** through communications fabric **1002.** In these illustrative examples, the instructions are in a functional form on persistent storage **1008.** These instructions may be loaded into memory **1006** for execution by processor unit **1004.** The processes of the different embodiments may be performed by processor unit **1004** using computer-implemented instructions, which may be located in a memory, such as memory **1006.**

These instructions are referred to as program instructions, program code, computer usable program code, or computer readable program code that may be read and executed by a processor in processor unit **1004.** The program code in the different embodiments may be embodied on different physical or computer readable storage media, such as memory **1006** or persistent storage **1008.**

Program code **1018** is located in a functional form on computer readable media **1020** that is selectively removable and may be loaded onto or transferred to data processing system **1000** for execution by processor unit **1004.** Program code **1018** and computer readable media **1020** form computer program product **1022** in these examples. In one example, computer readable media **1020** may be computer readable storage media **1024** or computer readable signal media **1026.**

Computer readable storage media **1024** may include, for example, an optical or magnetic disk that is inserted or placed into a drive or other device that is part of persistent storage **1008** for transfer onto a storage device, such as a hard drive, that is part of persistent storage **1008.** Computer readable storage media **1024** also may take the form of a persistent storage, such as a hard drive, a thumb drive, or a flash memory, that is connected to data processing system **1000.** In some instances, computer readable storage media **1024** may not be removable from data processing system **1000.**

In these examples, computer readable storage media **1024** is a physical or tangible storage device used to store program code **1018** rather than a medium that propagates or transmits program code **1018.** Computer readable storage media **1024** is also referred to as a computer readable tangible storage device or a computer readable physical storage device. In other words, computer readable storage media **1024** is a media that can be touched by a person.

Alternatively, program code **1018** may be transferred to data processing system **1000** using computer readable signal media **1026.** Computer readable signal media **1026** may be, for example, a propagated data signal containing program code **1018.** For example, computer readable signal media **1026** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some advantageous embodiments, program code **1018** may be downloaded over a network to persistent storage **1008** from another device or data processing system through computer readable signal media **1026** for use within data processing system **1000.** For instance, program code stored in a computer readable storage medium in a server data processing system may be downloaded over a network from the server to data processing system **1000.** The data processing system providing program code **1018** may be a server computer, a client computer, or some other device capable of storing and transmitting program code **1018.**

The different components illustrated for data processing system **1000** are not meant to provide architectural limitations to the manner in which different embodiments may be implemented. The different advantageous embodiments may be implemented in a data processing system including components in addition to or in place of those illustrated for data processing system **1000.** Other components shown in **Figure 10** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

In another illustrative example, processor unit **1004** may take the form of a hardware unit that has circuits that are manufactured or configured for a particular use. This type of hardware may perform operations without needing program code to be loaded into a memory from a storage device to be configured to perform the operations.

For example, when processor unit **1004** takes the form of a hardware unit, processor unit **1004** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, programmable array logic, a field programmable logic array, a field programmable gate array, and other suitable hardware devices. With this type of implementation, program code **1018** may be omitted, because the processes for the different embodiments are implemented in a hardware unit.

In still another illustrative example, processor unit **1004** may be implemented using a combination of processors found in computers and hardware units. Processor unit **1004** may have a number of hardware units and a number of processors that are configured to run program code **1018.** With this depicted example, some of the processes may be implemented in the number of hardware units, while other processes may be implemented in the number of processors.

In another example, a bus system may be used to implement communications fabric **1002** and may be comprised of one or more buses, such as a system bus or an input/output bus. Of course, the bus system may be implemented using any suitable type of architecture that provides for a transfer of data between different components or devices attached to the bus system.

Additionally, communications unit **1010** may include a number of devices that transmit data, receive data, or transmit and receive data. Communications unit **1010** may be, for example, a modem or a network adapter, two network adapters, or some combination thereof. Further, a memory may be, for example, memory **1006,** or a cache, such as found in an interface and memory controller hub that may be present in communications fabric **1002.**

The description of the different advantageous embodiments has been presented for purposes of illustration and description and is not intended to be exhaustive or to limit the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Alternative embodiments may be claimed as follows:
A1. A method for validating software parts (102) for an aircraft (104) comprising:
   receiving a number of software parts (102);
   determining a hash value for each of the number of software parts (102) to form a number of hash values; and
   combining the number of hash values into a software integrity data structure (118) for use in determining whether to perform operations on the number of software parts (102) on the aircraft (104).
A2. The method of paragraph A1 further comprising:
   loading the software integrity data structure (118) onto the aircraft (104);
   loading the number of software parts (102) onto the aircraft (104); and
   using the number of hash values from the software integrity data structure (118) to validate the number of software parts (102) on the aircraft (104) before performing the operations on the number of software parts (102) on the aircraft (104).
A3. The method of paragraph A1 further comprising:
   determining a fingerprint for the each of the number of software parts (102) to form a number of fingerprints; and
   combining the number of fingerprints into the software integrity data structure (118).
A4. The method of paragraph A1, wherein the software integrity data structure (118) comprises:
   attributes describing the software integrity data structure (118); and
   a number of records, each of the number of records
      corresponding to a software part used by the aircraft (104) and comprising the hash value for a corresponding software part.
A5. The method of paragraph A4, wherein the attributes comprise the attributes selected from a group of attributes consisting of a version identifier for the software integrity data structure (118), a version identifier for a schema used to create the software integrity data structure (118), information about aircraft (104) applicability, a name of an entity that created the software integrity data structure (118), and a date that the software integrity data structure (118) was created.
A6. The method of paragraph A4, wherein the each of the number of records further comprise the attributes selected from a group of attributes consisting of a part number (318) for the corresponding software part, a number indicating a number of files (322) that make up the corresponding software part, and a fingerprint for the software part.

## Claims

1. A method for validating software parts (102) on an aircraft (104), comprising:
calculating a first hash value for a software part on the aircraft (104);
determining, on the aircraft (104), whether the first hash value matches a second hash value from a software integrity data structure (118) stored on the aircraft (104), the software integrity data structure (118) comprising hash values that are not determined on the aircraft (104) for the software parts (102) used by the aircraft (104); and
performing an operation on the software part on the aircraft (104) only if the first hash value matches the second hash value.

2. The method of claim 1 further comprising:
calculating, on the aircraft (104), a number of first
attributes for the software part;
determining, on the aircraft (104), whether the number of first attributes matches a number of second attributes in the software integrity data structure (118); and
performing the operation on the software part on the aircraft (104) only if both the number of first attributes matches the number of second attributes and the first hash value matches the second hash value.

3. The method of claim 2, wherein the number of second
attributes comprises a fingerprint for the software part.

4. The method of claim 1, wherein calculating the first
hash value and determining whether the first hash value matches a second hash value are performed by an electronic system on the aircraft (104).

5. The method of claim 1, wherein:
calculating the first hash value comprises sending the software part to a software validator (226) on the aircraft (104), receiving the software part by the software validator (226), and calculating the first hash value from the software part by the software validator (226);
determining whether the first hash value matches the second hash value comprises identifying a record for the software part in the software integrity data structure (118), retrieving the second hash value from the record, and comparing the first hash value to the second hash value by the software validator (226); and
further comprising sending an indication by the software validator (226) if the first hash value matches the second hash value.

6. The method of claim 1, wherein:
calculating the first hash value comprises calculating the first hash value by an electronic system on the aircraft (104) and sending the first hash value from the electronic system to a software validator (226) on the aircraft (104);
determining whether the first hash value matches the second hash value comprises receiving the first hash value by the software validator (226), identifying a record for the software part in the software integrity data structure (118), retrieving the second hash value from the record, and comparing the first hash value to the second hash value by the software validator (226); and
further comprising sending an indication by the software validator (226) to the electronic system if the first hash value matches the second hash value.

7. The method of claim 1, wherein the software integrity
data structure (118) comprises:
attributes describing the software integrity data structure (118); and
a number of records, each of the number of records
corresponding to a software part used by the aircraft (104) and comprising a hash value for a corresponding software part.

8. An apparatus comprising:
a software integrity data structure (118) stored on an
aircraft (104), the software integrity data structure (118) comprising hash values that are not determined on the aircraft (104) for software parts (102) used by the aircraft (104);
a calculator (228) on the aircraft (104) configured to calculate a first hash value for a software part on the aircraft (104);
a comparator (230) on the aircraft (104) configured to determine whether the first hash value matches a second hash value from the software integrity data structure (118); and
wherein the aircraft (104) is configured to perform an operation on the software part only if the first hash value matches the second hash value.

9. The apparatus of claim 8, wherein:
the calculator (228) is configured to calculate a number of first attributes for the software part;
the comparator (230) is configured to determine whether the number of first attributes matches a number of second attributes in the software integrity data structure (118); and
the aircraft (104) is configured to perform the operation on the software part only if both the number of first attributes matches the number of second attributes and the first hash value matches the second hash value.

10. The apparatus of claim 9, wherein the number of second
attributes comprises a fingerprint for the software part.

11. The apparatus of claim 8, wherein the calculator (228) and
the comparator (230) are implemented on an electronic system on the aircraft (104), and the operation on the software part is performed by the electronic system on the aircraft (104).

12. The apparatus of claim 8, wherein:
the calculator (228) is implemented in a software validator (226) on the aircraft (104), the software validator (226) is configured to receive the software part and determine the first hash value from the software part; and
the comparator (230) is implemented in the software validator (226), the software validator (226) further configured to identify a record for the software part in the software integrity data structure (118), retrieve the second hash value from the record, compare the first hash value to the second hash value, and send an indication if the first hash value matches the second hash value.

13. The apparatus of claim 8, wherein:
the calculator (228) is implemented in an electronic system on the aircraft (104), the electronic system configured to send the first hash value to a software validator (226) on the aircraft (104);
the comparator (230) is implemented in the software validator (226), the software validator (226) configured to receive the first hash value from the electronic system, identify a record for the software part in the software integrity data structure (118), retrieve the second hash value from the record, compare the first hash value to the second hash value, and send an indication to the electronic system if the first hash value matches the second hash value; and
electronic systems (112) are further configured to perform the operation on the software part responsive to the indication from the software validator (226).

14. The apparatus of claim 8, wherein the software
integrity data structure (118) comprises:
attributes describing the software integrity data structure (118); and
a number of records, each of the number of records corresponding to a software part used by the aircraft (104) and comprising a hash value for a corresponding software part.
